# EUROPEAN PATENT APPLICATION

(11) **EP 4 837 732 A1**
(43) Date of publication of application: **11.11.2026**
(21) Application number: 25920088.9
(22) Date of filing: 10.12.2025
(51) Int. Cl.: B30B 3/00, B30B 15/34, H01M 4/04

(54) **ROLLING ROLL HAVING TWO OR MORE FLOW CHANNELS FORMED THEREIN**

(30) Priority: 15.01.2025 KR 20250006024; 09.12.2025 KR 20250194101
(71) Applicant: LG Energy Solution, Ltd., Seoul 07335 (KR)
(72) Inventor: LEE, Taeho, Daejeon 34122 (KR); KIM, Hwan Han, Daejeon 34122 (KR); CHOI, Nak Won, Daejeon 34122 (KR); KIM, Taehyung, Daejeon 34122 (KR); KWON, So Jung, Daejeon 34122 (KR); KIM, Yeonsu, Daejeon 34122 (KR)
(74) Representative: Plasseraud IP
(86) International application number: PCT/KR2025/021317
(87) International publication number: WO 2026/155388

(57) **Abstract**

According to an embodiment of the present disclosure, provided is a rolling roll comprising:
a roll body;
a shaft section for supporting the roll body; and
a flow path section that is formed inside the roll body and the shaft section, and comprises:
a center flow path section that includes a first center flow path formed in a form penetrating through the center of the roll body in a longitudinal direction of the roll body and the shaft section so that a cooling oil flows, and a second center flow path formed separately from the first center flow path so that the cooling oil flows, and
a full-width flow path section that includes a first full-width flow path formed so that the cooling oil flows in the vicinity of an outer peripheral surface of the roll body, and a second full-width flow path formed so that the cooling oil flows in the vicinity of the outer peripheral surface of the roll body,
wherein the length of the first full-width flow path is longer than the length of the second full-width flow path.

## Description

### TECHNICAL FIELD

### Cross-Reference to Related Application(s)

This application claims priority to and the benefit of Korean Patent Application No. 10-2025-0006024, filed on January 15, 2025, and Korean Patent Application No. 10-2025-0194101, filed on December 9, 2025, the entire contents of which are incorporated herein by reference.

The present disclosure relates to a rolling roll formed with two or more flow paths, and more particularly, to a rolling roll comprising two or more full-width flow path sections having full widths and lengths different from each other.

### BACKGROUND ART

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., a battery case, which seals and houses the electrode assembly together with an electrolyte.

Such secondary batteries have been widely used in medium and large devices such as electric vehicles and energy storage systems (ESSs), as well as in small devices such as portable electronic devices, and the extent of their use is rapidly increasing. Furthermore, in recent years, there has been a growing trend in the use of battery packs for power storage purposes, not only for vehicles but also for residential applications.

The manufacturing process of such a lithium secondary battery is roughly classified into three steps: an electrode process, an assembly process, and a formation process. The electrode process may be again divided into an active material mixing process, an electrode coating process, a rolling process, a slitting process, a winding process, and the like. Among them, the rolling process is a process of passing an electrode substrate between a pair of rolling rolls heated to high temperature and compressing it to a desired thickness, in order to reduce the thickness of the electrode substrate having finished the coating process to thereby increase capacity density, and to increase the adhesion between the electrode current collector and the electrode active material.

In this case, the rolling roll used in the rolling process basically has only one flow path formed inside.

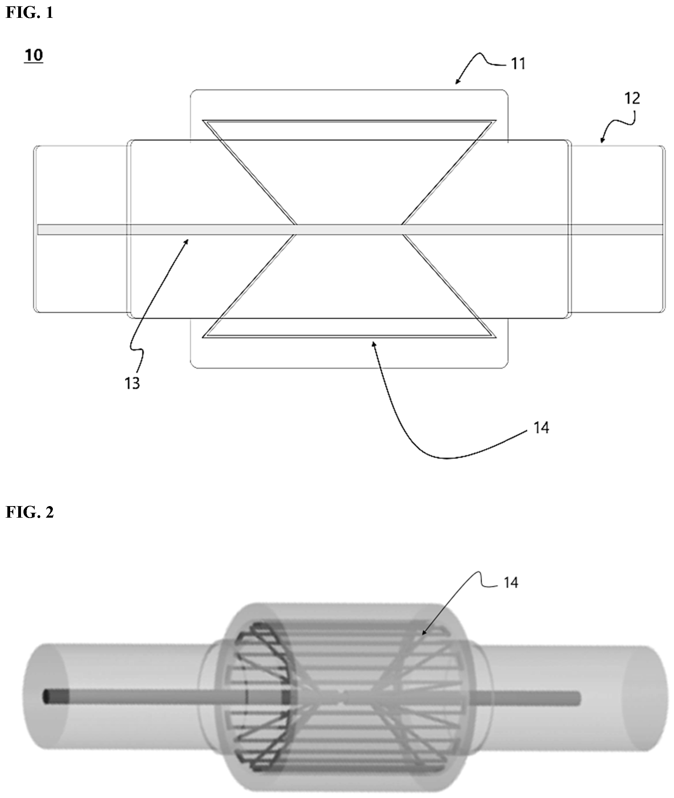

Specifically, a cross-sectional schematic diagram of a conventional rolling roll is shown in FIG. 1, and a perspective view is shown in FIG. 2.

Referring to FIGS. 1 and 2, the rolling roll 10 comprises a roll body 11, a shaft section 12 for supporting the roll body 11, and a flow path section comprising: a center flow path 13 formed inside the roll body 11 and the shaft section 12 and formed in a form penetrating through the center of the roll body 11 in the longitudinal direction of the roll body 11 and the shaft section 12 so that a cooling oil flows, and a full-width flow path 14 formed so that the cooling oil flows in the vicinity of the outer peripheral surface of the roll body 11.

Here, the cooling oil has a path that flows from the cooling oil supply section (not shown) through the center flow path 13, flows from the center flow path 13 to a full-width flow path 14 via a branch flow path, and then returns to the center flow path 13 and is discharged by the cooling oil discharge section (not shown).

Although not shown in the drawing, the center flow path 13 is structured to include a supply flow path connected to the cooling oil supply section and a discharge flow path connected to the cooling oil discharge section, wherein the supply flow path and the discharge flow path are divided and not mixed.

Additionally, the full-width flow path 14 has a zigzag pattern in the vicinity of the outer peripheral surface of the roll body 11, and is formed in five or more at intervals.

However, since the conventional rolling roll 10 with such a structure includes only one flow path, the crown shape for each rolling stand is fixed, whereby when rolling electrode models under different conditions on the same rolling stand, the side thickness is adjusted only by back pressure.

However, there is a problem that the optimal crown differs depending on the electrode model, whereby the thickness deviation between the center and side of the electrode occurs differently.

Further, when continuously producing the same electrode model on the same rolling stand, there is also the problem that the depression in side thickness occur as the continuous operation time increases even at the maximum back pressure.

Therefore, there is a need to develop a rolling technology that can improve electrode quality by rolling with an optimal crown for each electrode model and preventing depression of the side from occurring even when continuously producing the same electrode model.

### DETAILED DESCRIPTION OF THE INVENTION

### Technical Problem

It is an object of the present disclosure to improve side thickness process capability by providing an optimal crown for each model.

It is another object of the present disclosure to provide a rolling roll that can secure maximum back pressure margin even when continuously producing the same model.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a rolling roll comprising:
a roll body;
a shaft section for supporting the roll body; and
a flow path section that is formed inside the roll body and the shaft section, and comprises:
   a center flow path section that includes a first center flow path formed in a form penetrating through the center of the roll body in a longitudinal direction of the roll body and the shaft section so that a cooling oil flows, and a second center flow path formed separately from the first center flow path so that the cooling oil flows, and
   a full-width flow path section that includes a first full-width flow path formed so that the cooling oil flows in the vicinity of an outer peripheral surface of the roll body, and a second full-width flow path formed so that the cooling oil flows in the vicinity of the outer peripheral surface of the roll body,
   wherein the length of the first full-width flow path is longer than the length of the second full-width flow path.

Here, the first center flow path and the first full-width flow path may be formed in parallel, and the second center flow path and the second full-width flow path may be formed in parallel.

Also, the rolling roll may further comprise a first branch flow path formed to connect the first center flow path and the first full-width flow path, and a second branch flow path formed to connect the second center flow path and the second full-width flow path.

In one specific embodiment, the first center flow path may comprise a first supply center flow path flowing in a first direction which is a direction of supplying the cooling oil, and a first discharge center flow path flowing in a second direction which is an opposite direction to the first direction and is a direction of discharging the cooling oil, and
the first branch flow path may comprise a first supply branch flow path formed so that the cooling oil flows from the first supply center flow path to the first full-width flow path, and a first discharge branch flow path formed so that the cooling oil flows from the first full-width flow path to the first discharge center flow path.

Additionally, the second center flow path may comprise a second supply center flow path flowing in a first direction which is a direction of supplying the cooling oil, and a second discharge center flow path flowing in a second direction which is an opposite direction to the first direction and is a direction of discharging the cooling oil,
the second branch flow path may comprise a second supply branch flow path formed so that the cooling oil flows from the second supply center flow path to the second full-width flow path, and a second discharge branch flow path formed so that the cooling oil flows from the second full-width flow path to the second discharge center flow path, and
the second supply branch flow path and the second discharge branch flow path may be formed so that their widths gradually increase from the second supply center flow path side toward the second full-width flow path side.

In one specific embodiment, the first center flow path may comprise a 1-1 supply center flow path flowing in a first direction which is a direction of supplying the cooling oil, a 1-2 supply center flow path flowing in a second direction which is an opposite direction to the first direction, and a first discharge center flow path that flows so as to discharge the cooling oil in the second direction, and
the first branch flow path may comprise a first supply branch flow path formed so that the cooling oil flows from the 1-2 supply center flow path to the first full-width flow path, and a first discharge branch flow path formed so that the cooling oil flows from the first full-width flow path to the first discharge center flow path.

Additionally, the second center flow path may comprise a second supply center flow path flowing in a first direction, which is a direction of supplying the cooling oil, and a second discharge flow path flowing in a second direction, which is an opposite direction to the first direction and is a direction of discharging the cooling oil,
the second branch flow path may comprise a second supply branch flow path formed so that the cooling oil flows from the second supply center flow path to the second full-width flow path, and a second discharge branch flow path formed so that the cooling oil flows from the second full-width flow path to the discharge supply center flow path, and
the second supply branch flow path and the second discharge branch flow path may be formed so that their widths gradually increase from the second supply center flow path side toward the second full-width flow path side.

In one specific embodiment, the first full-width flow path may comprise a 1-1 full-width flow path flowing in a first direction which is a direction of supplying the cooling oil, a 1-2 full-width flow path flowing in a second direction which is an opposite direction to the first direction and is a direction of discharging the cooling oil, and a first connection flow path that connects the 1-1 full-width flow path and the 1-2 full-width flow path, and
the second full-width flow path may comprise a 2-1 full-width flow path flowing in the first direction, a 2-2 full-width flow path flowing in the second direction, and a second connection flow path that connects the 2-1 full-width flow path and the 2-2 full-width flow path.

Here, the 1-1 full-width flow path and the 2-1 full-width flow path flowing in the first direction may be respectively formed in one, and the 1-2 full-width flow path and the 2-2 full-width flow path flowing in the second direction may be respectively formed in two.

On the other hand, the first full-width flow path nay have a length of 60 to 95% of the roll body length, and the second full-width flow path may have a length of 10 to 70% of the roll body length in a range shorter than the length of the first full-width flow path.

Additionally, the first full-width flow path and the second full-width flow path may be alternately arranged in a circumferential direction of the roll body. In this case, the first full-width flow path and the second full-width flow path may be arranged at equal intervals.

The first full-width flow path and the second full-width flow path may be respectively formed in three or more.

Further, the first full-width flow path and the second full-width flow path may be formed at mutually different depths on the surface of the roll body.

In one specific embodiment, the full-width flow path section may further comprise a third full-width flow path having a length shorter than the second full-width flow path.

The cooling oil may be adjusted to flow only through the first full-width flow path, flow only through the second full-width flow path, or flow simultaneously through the first full-width flow path and the second full-width flow path.

The cooling oil may have a temperature in the range of 25°C to 100°C. When adjusted to flow simultaneously through the first full-width flow path and the second full-width flow path, the first full-width flow path and the second full-width flow path may be adjusted so that cooling oils having mutually different temperatures flow therethrough.

### BRIEF DESCRIPTION OF THE DRAWINGS

FIG. 1 is a schematic cross-sectional view of a conventional rolling roll.
FIG. 2 is a perspective view of a conventional rolling roll.
FIG. 3 is a schematic cross-sectional view of a rolling roll according to one embodiment of the present disclosure.
FIG. 4 is an enlarged schematic view of the center flow path section in the rolling roll of FIG. 3.
FIG. 5 is a schematic cross-sectional view of the center flow path section in the rolling roll of FIG. 3.
FIG. 6 is a perspective view showing the configuration of the first full-width flow path and the first branch flow path in the rolling roll of FIG. 3.
FIG. 7 is a perspective view of the rolling roll of FIG. 3.
FIG. 8 is a schematic cross-sectional view of the roll body of FIG. 3.
FIG. 9 is a schematic cross-sectional view of a rolling roll according to another embodiment of the present disclosure.
FIG. 10 is an enlarged schematic view of the center flow path section of the rolling roll of FIG. 9.

### DETAILED DESCRIPTION OF THE EMBODIMENTS

Hereinafter, various embodiments of the present disclosure will be described in detail with reference to the accompanying drawings so that inventive concept may be readily implemented by those skilled in the art. The present disclosure may be realized in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the specification, when a portion is referred to as "including" or " comprising" a certain component, it means that the portion can further include other compone nts, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Now, embodiments of the present disclosure will be described with reference to the accompanying drawings.

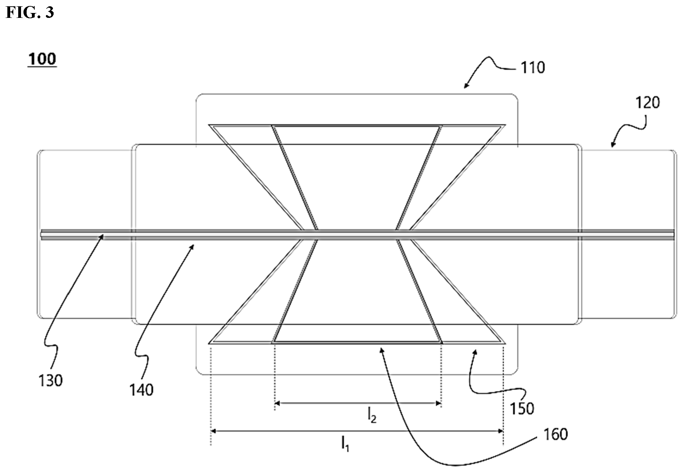

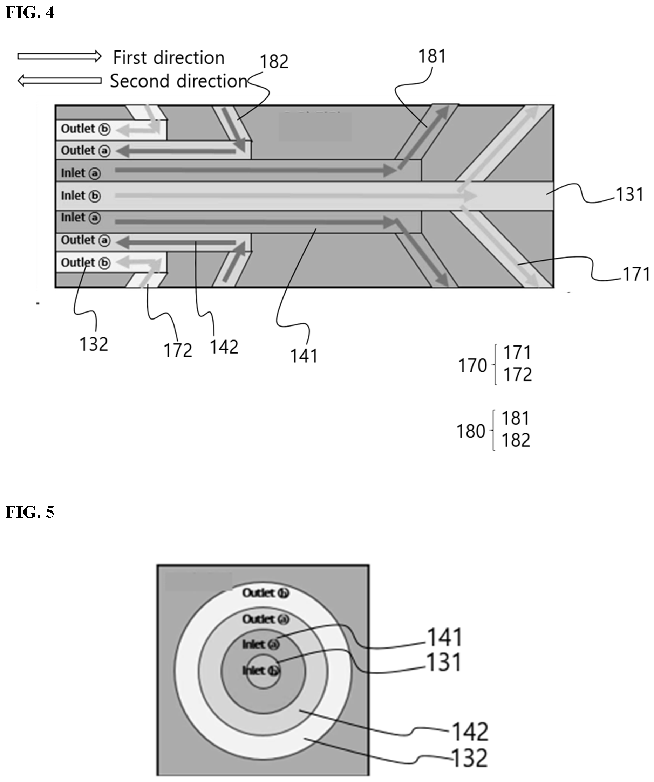

FIG. 3 shows a schematic cross-sectional view of a rolling roll according to one embodiment of the present disclosure. FIG. 4 shows an enlarged schematic view of the vicinity of the center flow path section in the rolling roll. FIG. 5 shows a schematic cross-sectional view of the center flow path section.

First, referring to FIG. 3, the rolling roll 100 according to one embodiment of the present disclosure is structured to include a roll body 110; a shaft section 120 for supporting the roll body 110; and a flow path section formed inside the roll body 110 and the shaft section 120.

Here, the flow path section comprises: a center flow path section that includes a first center flow path 130 formed in a form penetrating through the center of the roll body 110 in a longitudinal direction of the roll body 110 and the shaft section 120 so that a cooling oil flows, and a second center flow path 140 formed separately from the first center flow path 130 so that the cooling oil flows, and a full-width flow path section that includes a first full-width flow path 150 formed so that the cooling oil flows in the vicinity of the outer peripheral surface of the roll body 110, and a second full-width flow path 160 formed so that the cooling oil flows in the vicinity of the outer peripheral surface of the roll body 110, wherein the length l₁ of the first full-width flow path 150 is longer than the length l₂ of the second full-width flow path 160.

Also, referring to FIGS. 3 and 4 together, a first center flow path 130 and the first full-width flow path 150 are formed in parallel, wherein the first center flow path 130 is connected to the first full-width flow path 150 by the first branch flow path 170, and the second center flow path 140 and the second full-width flow path 160 are formed in parallel, wherein the second center flow path 140 is connected to the second full-width flow path 160 by the second branch flow path 180.

The respective flow paths will be described in more detail below.

First, referring to FIGS. 3 to 5, the first center flow path 130 comprises a first supply center flow path 131 flowing in a first direction which is a direction of supplying the cooling oil, and a first discharge center flow path 132 flowing in a second direction which is an opposite direction to the first direction and is a direction of discharging the cooling oil. Here, the first supply center flow path 131 is located on the innermost side of the center flow path section, and the first discharge center flow path 132 is located on the outermost side of the center flow path section. Such positions are not limited, and any structure is possible as long as they are distinguishable from one another.

Further, the first supply center flow path 131 and the first discharge center flow path 132 are connected to the first full-width flow path 150 by the first branch flow path 170. Specifically, the cooling oil flowing into the first supply center flow path 131 flows to the first full-width flow path 150 through the first supply branch flow path 171, and the cooling oil circulating through the first full-width flow path 150 is discharged from the rolling roll 100 through the first discharge center flow path 132 at the first discharge branch flow path 172.

In this case, the first supply branch flow path 171 and the first discharge branch flow path 172 may be formed so that their widths gradually increase from the first central supply path 131 side toward the first full-width flow path 150 side.

Similarly, the second center flow path 140 comprises a second supply center flow path 141 flowing in a first direction, which is a direction of supplying the cooling oil, and a second discharge center flow path 142 flowing in a second direction, which is an opposite direction to the first direction and is a direction of discharging the cooling oil. Here, the second supply center flow path 141 is located outside along the outer peripheral surface of the first supply center flow path 131, which is located on the innermost side of the center flow path section, and the second discharge center flow path 142 is located between the first discharge center flow path 132, which is located on the outermost side of the center flow path section, and the second supply center flow path 141. Such positions are not limited, and any structure is possible as long as they are distinguishable from one another.

Further, the second supply center flow path 141 and the second discharge center flow path 142 are connected to the second full-width flow path 160 by the second branch flow path 180. Specifically, the cooling oil flowing into the second supply center flow path 141 flows to the second full-width flow path 160 through the second supply branch flow path 181, and the cooling oil circulating through the second full-width flow path 160 is discharged from the rolling roll 100 through the second discharge center flow path 142 by the second discharge branch flow path 182.

In this case, the second supply branch flow path 181 and the second discharge branch flow path 182 are formed so that their widths gradually increase from the second supply center flow path 141 toward the second full-width flow path 160.

As described above, according to the present disclosure, the rolling roll has a structure in which the cooling oil circulates inside the rolling roll 100 through two flow paths respectively. Here, the length of the first full-width flow path 150 is longer than the length of the second full-width flow path 160, and therefore, the cooling oil flowing through the first supply center flow path 131 - first supply branch flow path 171 - first full-width flow path 140 - first discharge branch flow path 172 - first discharge center flow path 132 has a longer circulation structure than the cooling oil flowing through the second supply center flow path 141 - second supply branch flow path 181 - first full-width flow path 150 - first discharge branch flow path 182 - first supply center flow path 142.

The rolling roll 100 according to the present disclosure has two flow paths in this way, and when different models of electrodes are produced on the same rolling stand, an optimum crown can be applied, thereby improving the ease of side thickness control.

Specifically, the cooling oil may be adjusted to flow only through the first full-width flow path, or flow only through the second full-width flow path, or flow simultaneously through the first full-width flow path and the second full-width flow path.

In this case, when the cooling oil is flowed using only the first full-width flow path 150, the heat transfer zone in the vicinity of the outer peripheral surface of the roll body 110 is longer in the longitudinal direction, which may minimize the difference in temperature between the center and side and thus achieve a minimal crown shape. When the cooling oil is flowed using only the second full-width flow path 160, the heat transfer zone in the vicinity of the outer peripheral surface of the roll body 110 is shorter in the longitudinal direction, which may maximize the difference in temperature between the center and side, and thus achieve a maximum crown shape. Further, such first full-width flow path 150 and second full-width flow path 160 are used simultaneously, and the temperatures of the cooling oil flowing through them are made different, which may make it possible to adjust the difference in temperature between the center and side and thus enable the optimal crown to be applied to each electrode model.

Here, the cooling oil may have a temperature in the range of 25°C to 100°C, specifically 25°C to 80°C, and more specifically 30°C to 80°C. By adjusting the temperature of the cooling oil within this range, it is possible to adjust the crown shape.

Further, as described above, when the cooling oil is adjusted to flow simultaneously through the first full-width flow path 150 and the second full-width flow path 160, the temperatures of the cooling oil flowing through them may differ from each other within the above range, and the specific temperatures may be appropriately selected in accordance with the crown shape to be realized.

Meanwhile, the difference in length between the first full-width flow path 150 and the second full-width flow path 160 can be appropriately determined in consideration of application of the crown. However, in order to be able to apply an optimal crown to various models, the length l₁ of the first full-width flow path 150 is preferably formed to be as similar as possible to the length of the vicinity of the outer peripheral surface of the roll body 110, and thus may be 60 to 99%, specifically 70 to 95%, more specifically 80 to 95%, and most specifically 90 to 95%, of the length of the roll body 110.

When the length is within the above range, it is easy to provide a difference from the second full-width flow path 160, thereby making crown adjustment easy.

Meanwhile, the second full-width flow path 160 is preferably formed to a shorter range than the first full-width flow path 150. In order to achieve a minimum crown, its length l₂ may be 10 to 70%, specifically 20 to 70%, or more specifically 30 to 60% of the length of the roll body 110, within a range shorter than the length l₁ of the first full-width flow path 150.

When the length is within the above range, it is easy to provide a difference from the first full-width flow path 150. Meanwhile, the first full-width flow path 150 and the second full-width flow path 160 may also be formed into one straight flow path, or further, may be formed into three or more zigzag flow paths.

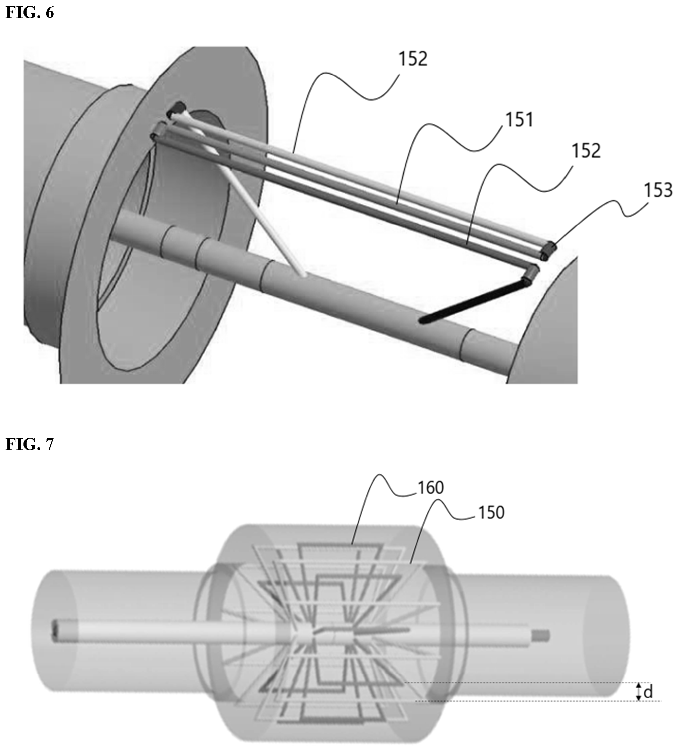

To explain this in detail, a perspective view for showing the shape of the first full-width flow path 150 and the first branch flow path 170 is illustrated in FIG. 6.

Referring to FIG. 6, the first full-width flow path 150 may be structured to include one 1-1 full-width flow path 151 flowing in a first direction which is a direction of supplying a cooling oil, two 1-2 full-width flow paths 152 flowing in a second direction which is an opposite direction to the first direction and is a direction of discharging the cooling oil, and first connection flow paths 153 that connect the 1-1 full-width flow path 151 and the 1-2 full-width flow path 152.

Therefore, referring to FIGS. 4 and 6 together, the cooling oil supplied to flow in the first direction through the first supply center flow path 131 flows to the first supply branch flow path 171, flows in the second direction through the first connection flow path 153 and the first 1-2 full-width flow path 152, then flows in the first direction through the second first connection flow path 153 and the 1-1 full-width flow path 151, then flows again in the second direction through the third first connection flow path 153 and the second 1-2 full-width flow path 152, then passes through the fourth first connection flow path 153 and is transmitted to the first discharge center flow path 132 through the first discharge branch flow path 172.

Similarly, although not shown in the drawing, as described in FIG. 6, the second full-width flow path may also be structured to include one 2-1 full-width flow path flowing in a first direction which is a direction of supplying cooling oil, two 2-2 full-width flow paths flowing in a second direction which is an opposite direction to the first direction and is a direction of discharging the cooling oil, and second connection flow paths that connect the 2-1 full-width flow path and the 2-2 full-width flow path. Cooling oil flows through the second supply center flow path - the second supply branch flow path - the second connection flow path - the 2-2 full-width flow path - the second connection flow path - the 2-1 full-width flow path - the second connection flow path - the 2-2 full-width flow path - the second connection flow path - the second discharge branch flow path - the second discharge center flow path 142.

When the first full-width flow path 150 and the second full-width flow path 160 are formed in a zigzag pattern as described above, it is possible not only to improve temperature-maintaining performance and further reduce temperature deviation in the circumferential direction and left-right direction of the rolling roll, but also to shorten the time required for temperature change, which is more preferable.

However, if the flow paths are repeated in a zigzag pattern excessively, the durability of the rolling roll where the flow path is located may be weakened, and it is disadvantageous for maintaining the surface temperature, which is not preferable.

Meanwhile, for convenience of explanation, in FIGS. 3 to 6, the first full-width flow path 150 and the second full-width flow path 160 are shown in a configuration where they are on a single plane, and one first full-width flow path 150 and one second full-width flow path 160 are shown as representative examples, however, the first full-width flow path 150 and the second full-width flow path 160 have a structure in which they are arranged alternately along the circumferential direction of the roll body 110, and each of these flow paths may be formed in three or more.

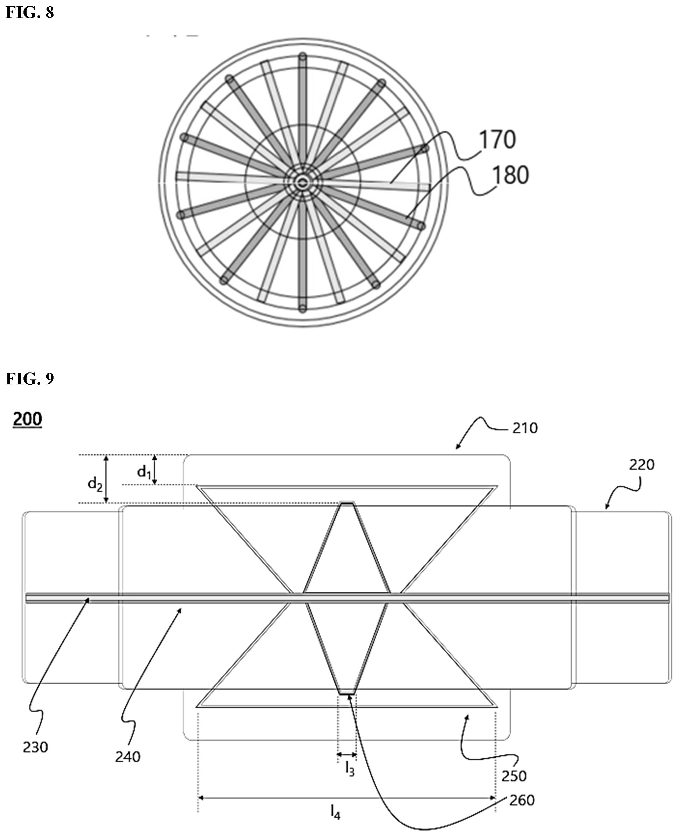

To illustrate this, FIGS. 7 and 8 show a perspective view of the rolling roll 100 according to the present disclosure and a cross-sectional schematic view of the roll body, respectively.

Referring to FIG. 7, the first full-width flow path 150 and the second full-width flow path 160 are alternately arranged along the circumferential direction of the roll body 110. In this case, the first full-width flow path 150 and the second full-width flow path 160 may be arranged at equal intervals d.

Thereby, crown adjustment is possible all over the circumferential direction of the roll body 110.

Further, if the first full-width flow path 150 and the second full-width flow path 160 are formed into a single straight flow path, each of these flow paths may be formed in, specifically, five or more, or more specifically, ten or more. When these flow paths are formed in a zigzag pattern, they may be respectively formed in three or more, specifically, four or more, and more specifically, five.

As these gaps (d) are narrower, the flow paths are more densely formed in a circumferential direction of the outer peripheral surface of the roll body 110, which is more effective for crown adjustment however, in consideration of the flow path formation processability, it is preferable to form the flow paths within the above range. Furthermore, if the first full-width flow path 150 and the second full-width flow path 160 are formed in a zigzag pattern, the supply branch flow path and the discharge branch flow path are not formed at the same position in the cross-sectional view of the roll body 110, but are formed at a constant angle.

Therefore, while FIG. 8 shows a cross-section of the roll body 110 formed with five first full-width flow paths 150 and five second full-width flow paths 160, it appears that ten first branch flow paths 170 and ten second branch flow paths 180 are formed accordingly.

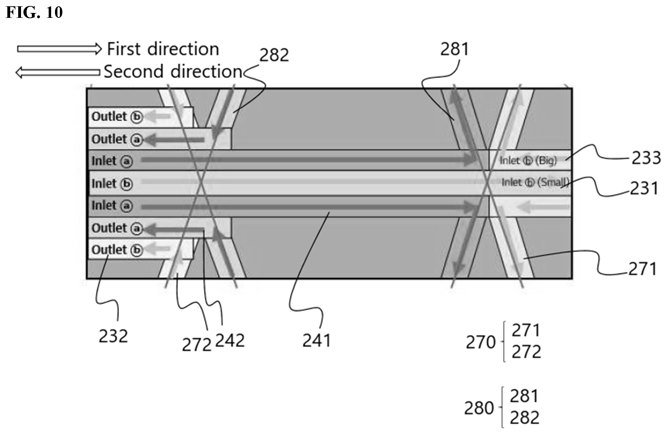

Referring again to FIG. 3, the first full-width flow path 150 and the second full-width flow path 160 are shown as being formed at the same depth on the surface of the roll body 110, but they may also be formed at different depths. Such examples are described in FIGS. 9 and 10 below.

Meanwhile, although not shown in the drawing, the full-width flow path section may further include a third full-width flow path having a shorter length than the second full-width flow path 160, and it goes without saying that forming two or more full-width flow paths fall within the scope of the present disclosure.

Furthermore, FIGS. 9 and 10 show a rolling roll 200 according to another embodiment of the present disclosure.

Referring to FIGS. 9 and 10, the rolling roll 200 differs from the rolling roll 100 of FIGS. 3 to 8 in the shape formed by the second supply branch flow paths and the second discharge branch flow paths and the length of the second full-width flow path.

More specifically, the first center flow path 230 comprises a 1-1 supply center flow path 231 flowing in a first direction, which is a direction of supplying the cooling oil, a 1-2 supply center flow path 233 flowing in a second direction, which is an opposite direction to the first direction, and a first discharge center flow path 232 flowing so as to discharge the cooling oil in the second direction. Here, the 1-1 supply center flow path 231 is located on the innermost side of the center flow path section, and the 1-2 supply center flow path 233 is formed in the opposite direction at the same position as the second supply center flow path 241 of the second center flow path 240, which will be described later. The first discharge center flow path 232 is located on the outermost side of the center flow path section. Such positions are not limited, and any structure is possible as long as they are distinguishable from one another.

The 1-2 supply center flow path 233 and the first discharge center flow path 232 are connected to the first full-width flow path 250 by the first branch flow path 270. Specifically, the cooling oil flowing into the 1-2 supply center flow path 233 flows into the first full-width flow path 250 through the first supply branch flow path 271, and the cooling oil circulating through the first full-width flow path 250 is discharged from the rolling roll 200 through the first discharge center flow path 232 through the first discharge branch flow path 272.

In this case, the first supply center flow path 271 and the first supply center flow path 272 may be formed so that their widths gradually increase from the 1-1 supply center flow path 231 toward the first full-width flow path 250 side.

Similarly, the second center flow path 240 comprises a second supply center flow path 241 flowing in a first direction, which is a direction of supplying the cooling oil, and a second supply center flow path 242 flowing in a second direction, which is an opposite direction to the first direction and is a direction of discharging the cooling oil. Here, the second supply center flow path 241 is located outside the outer peripheral surface of the 1-1 supply center flow path 231, which is located on the innermost side of the center flow path section, and the second supply center flow path 242 is located between the first discharge center flow path 232 and the second supply center flow path 241, which are located on the outermost side of the center flow path section. Such positions are not limited, and any structure is possible as long as they are distinguishable from one another.

Further, the second supply center flow path 241 and the second supply center flow path 242 are connected to the second full-width flow path 260 by the second branch flow path 280. Specifically, the cooling oil flowing into the second supply center flow path 241 flows to the second full-width flow path 260 through the second supply branch flow path 281, and the cooling oil circulating through the second full-width flow path 260 is discharged from the rolling roll 200 through the second supply center flow path 242 by the second discharge branch flow path 282.

In this case, the second supply branch flow path 281 and the second discharge branch flow path 282 are formed such that their widths gradually decrease from the second supply center flow path 241 side toward the second full-width flow path 260 side.

The length l₄ of the first full-width flow path 250 and the length l₃ of the second full-width flow path 260 are as described above.

As described above, according to the present disclosure, the rolling roll has a structure in which the cooling oil circulates inside the rolling roll 200 through two flow paths, respectively. Here, the length of the first full-width flow path 250 is longer than the second full-width flow path 260, and thus has a longer circulation structure compared to the cooling oil flowing through the first full-width flow path 250.

The rolling roll 200 according to the present disclosure has two flow paths, and thus can apply an optimal crown when producing electrodes of different models on the same rolling stand, thereby improving the ease of side thickness control.

Other descriptions regarding the circulation structure, number, arrangement, etc. of the first center flow path 230, the second center flow path 240, the first full-width flow path 250, and the second full-width flow path 260 are similar to those described regarding the rolling roll 200.

However, FIG. 3 shows that the first full-width flow path 150 and the second full-width flow path 160 are formed at the same depth from the surface of the roll body 110, however, referring to FIG. 9, the depth d1 at which the first full-width flow path 250 is formed from the surface of the roll body 210 is shorter than the depth d2 at which the second full-width flow path 260 is formed from the surface of the roll body 210.

Further, although not shown in the drawing, the depth at which the second full-width flow path is formed from the surface of the roll body may be shorter than the depth at which the first full-width flow path is formed from the surface of the roll body.

That is, as shown in FIGS. 3 and 9, the first full-width flow path and the second full-width flow path may have the same or different depths from the surface of the roll body, and in particular may be different from each other.

When the depths are formed differently, it is possible to alleviate temperature deviations on the roll body surface and prevent the first full-width flow path and the second full-width flow path from interfering with each other, as well as to exhibit effects such as alleviating internal temperature deviations and improving the durability of the rolling roll surface. The rolling roll according to the present disclosure is used in conjunction with a rolling mill for rolling and forming battery electrodes for secondary batteries.

The roll body has a rolling surface, which serves as the outer peripheral surface that contacts the electrode when rolling and forming the electrode, for example, for a secondary battery, and although not shown in the drawing, the shaft section is supported by the rolling mill via ball bearing.

The rolling roll according to the present disclosure may be a chrome rolling roll or a DLC (diamond-like carbon) rolling roll.

Although preferred embodiments of the present disclosure have been shown and described above with reference to the accompanying drawings, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: conventional rolling roll
100, 200: rolling roll according to the present disclosure
110, 210: roll body
120, 220: shaft section
130, 230: first center flow path
140, 240: second center flow path
150, 250: first full-width flow path
160, 260: second full-width flow path
170, 270: first branch flow path
180, 280: second branch flow path

### Industrial Applicability

According to the present disclosure, two flow paths are applied to the rolling roll, and the full width and length of these flow paths are made different, which makes it possible to apply the optimal crown for each model on the same rolling stand, thereby exhibiting the effect of improving electrode side thickness process capability.

In addition, even when continuously producing the same model on the same rolling stand, the maximum back pressure margin can be secured, thereby improving thickness process capability and improving electrode quality.

The effects of the present disclosure are not limited to the effects mentioned above, and additional other effects not mentioned above will be clearly understood from the description of the appended claims by those skilled in the art.

## Claims

1. A rolling roll comprising:
a roll body;
a shaft section for supporting the roll body; and
a flow path section that is formed inside the roll body and the shaft section, and comprises:
a center flow path section that includes a first center flow path formed in a form penetrating through the center of the roll body in a longitudinal direction of the roll body and the shaft section so that a cooling oil flows, and a second center flow path formed separately from the first center flow path so that the cooling oil flows, and
a full-width flow path section that includes a first full-width flow path formed so that the cooling oil flows in the vicinity of an outer peripheral surface of the roll body, and a second full-width flow path formed so that the cooling oil flows in the vicinity of the outer peripheral surface of the roll body,
wherein the length of the first full-width flow path is longer than the length of the second full-width flow path.

2. The rolling roll according to claim 1,
wherein the first center flow path and the first full-width flow path are formed in parallel, and the second center flow path and the second full-width flow path are formed in parallel.

3. The rolling roll according to claim 1,
further comprising a first branch flow path formed to connect the first center flow path and the first full-width flow path, and a second branch flow path formed to connect the second center flow path and the second full-width flow path.

4. The rolling roll according to claim 3,
wherein the first center flow path comprises a first supply center flow path flowing in a first direction which is a direction of supplying the cooling oil, and a first discharge center flow path flowing in a second direction which is an opposite direction to the first direction and is a direction of discharging the cooling oil, and
the first branch flow path comprises a first supply branch flow path formed so that the cooling oil flows from the first supply center flow path to the first full-width flow path, and a first discharge branch flow path formed so that the cooling oil flows from the first full-width flow path to the first discharge center flow path.

5. The rolling roll according to claim 3,
wherein the second center flow path comprises a second supply center flow path flowing in a first direction which is a direction of supplying the cooling oil, and a second discharge center flow path flowing in a second direction which is an opposite direction to the first direction and is a direction of discharging the cooling oil,
the second branch flow path comprises a second supply branch flow path formed so that the cooling oil flows from the second supply center flow path to the second full-width flow path, and a second discharge branch flow path formed so that the cooling oil flows from the second full-width flow path to the second discharge center flow path, and
the second supply branch flow path and the second discharge branch flow path are formed so that their widths gradually increase from the second supply center flow path side toward the second full-width flow path side.

6. The rolling roll according to claim 3,
wherein the first center flow path comprises a 1-1 supply center flow path flowing in a first direction which is a direction of supplying the cooling oil, a 1-2 supply center flow path flowing in a second direction which is an opposite direction to the first direction, and a first discharge center flow path that flows so as to discharge the cooling oil in the second direction, and
the first branch flow path comprises a first supply branch flow path formed so that the cooling oil flows from the 1-2 supply center flow path to the first full-width flow path, and a first discharge branch flow path formed so that the cooling oil flows from the first full-width flow path to the first discharge center flow path.

7. The rolling roll according to claim 3,
wherein the second center flow path comprises a second supply center flow path flowing in a first direction, which is a direction of supplying the cooling oil, and a second discharge center flow path flowing in a second direction, which is an opposite direction to the first direction and is a direction of discharging the cooling oil,
the second branch flow path comprises a second supply branch flow path formed so that the cooling oil flows from the second supply center flow path to the second full-width flow path, and a second discharge branch flow path formed so that the cooling oil flows from the second full-width flow path to the second discharge center flow path, and
the second supply branch flow path and the second discharge branch flow path are formed so that their widths gradually increase from the second supply center flow path side toward the second full-width flow path side.

8. The rolling roll according to claim 1,
wherein the first full-width flow path comprises a 1-1 full-width flow path flowing in a first direction which is a direction of supplying the cooling oil, a 1-2 full-width flow path flowing in a second direction which is an opposite direction to the first direction and is a direction of discharging the cooling oil, and a first connection flow path that connects the 1-1 full-width flow path and the 1-2 full-width flow path, and
the second full-width flow path comprises a 2-1 full-width flow path flowing in the first direction, a 2-2 full-width flow path flowing in the second direction, and a second connection flow path that connects the 2-1 full-width flow path and the 2-2 full-width flow path.

9. The rolling roll according to claim 8,
wherein the 1-1 full-width flow path and the 2-1 full-width flow path flowing in the first direction are respectively formed in one, and the 1-2 full-width flow path and the 2-2 full-width flow path flowing in the second direction are respectively formed in two.

10. The rolling roll according to claim 1,
wherein the first full-width flow path has a length of 60 to 95% of the roll body length, and the second full-width flow path has a length of 10 to 70% of the roll body length in a range shorter than the length of the first full-width flow path.

11. The rolling roll according to claim 1,
wherein the first full-width flow path and the second full-width flow path are alternately arranged in a circumferential direction of the roll body.

12. The rolling roll according to claim 11,
wherein the first full-width flow path and the second full-width flow path are arranged at equal intervals.

13. The rolling roll according to claim 1,
wherein the first full-width flow path and the second full-width flow path are respectively formed in three or more.

14. The rolling roll according to claim 1,
wherein the first full-width flow path and the second full-width flow path are formed at mutually different depths on the surface of the roll body.

15. The rolling roll according to claim 1,
wherein the full-width flow path section further comprises a third full-width flow path having a length shorter than the second full-width flow path.

16. The rolling roll according to claim 1,
wherein the cooling oil is adjusted to flow only through the first full-width flow path, or flow only through the second full-width flow path, or flow simultaneously through the first full-width flow path and the second full-width flow path.

17. The rolling roll according to claim 1,
wherein the cooling oil has a temperature in the range of 25°C to 100°C.

18. The rolling roll according to claim 17,
wherein when adjusted to flow simultaneously through the first full-width flow path and the second full-width flow path, the first full-width flow path and the second full-width flow path are adjusted so that cooling oils having mutually different temperatures flow therethrough.
